(19) Europäisches Patentamt
European Patent Office
Office européen des brevets

(11) EP 4 253 081 A1

(12) **EUROPEAN PATENT APPLICATION**
published in accordance with Art. 153(4) EPC

(43) Date of publication:
**04.10.2023 Bulletin 2023/40**

(21) Application number: **21898150.4**

(22) Date of filing: **29.11.2021**

(51) International Patent Classification (IPC):
***B60C 1/00*** (2006.01) ***C08L 9/00*** (2006.01)
***C08L 9/06*** (2006.01) ***C08L 101/12*** (2006.01)
***C08K 3/04*** (2006.01) ***C08K 3/36*** (2006.01)

(52) Cooperative Patent Classification (CPC):
**B60C 1/00; C08K 3/04; C08K 3/36; C08L 9/00; C08L 9/06; C08L 101/12**

(86) International application number:
**PCT/JP2021/043603**

(87) International publication number:
**WO 2022/114178 (02.06.2022 Gazette 2022/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.11.2020 JP 2020197516**

(71) Applicant: **ENEOS Materials Corporation**
**Tokyo 105-0021 (JP)**

(72) Inventors:
- **SENGA, Hirofumi**
  **Tokyo 105-0021 (JP)**
- **KIKUCHI, Toshimitsu**
  **Tokyo 105-0021 (JP)**
- **SAKAGAMI, Yuto**
  **Tokyo 105-0021 (JP)**
- **SANO, Takuya**
  **Tokyo 105-0021 (JP)**
- **FUKUMOTO, Takato**
  **Tokyo 105-0021 (JP)**
- **HAYAKAWA, Toshiyuki**
  **Tokyo 105-0021 (JP)**

(74) Representative: **TBK**
**Bavariaring 4-6**
**80336 München (DE)**

# (54) POLYMER COMPOSITION, CROSS-LINKED PRODUCT, AND TIRE

(57) A polymer composition includes a conjugated diene-based polymer (A) and a liquid polymer (B), wherein: the conjugated diene-based polymer (A) includes a polymer (A1) satisfying expression (i) when a composition ratio (molar ratio) of a structural unit represented by formula (1), a structural unit represented by formula (2), a structural unit represented by formula (3) and a structural unit represented by formula (4) in the polymer is p, q, r and s, respectively; a glass transition temperature of the polymer (A1) is -40°C or less; and the liquid polymer (B) is polybutadiene, polyisoprene, polyisobutylene, polybutene, or the like. Expression (i):$0.75 \leq (p + (0.5 \times r))/ (p + q + (0.5 \times r) + s) \leq 0.97$.

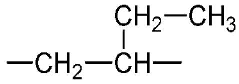
(1)

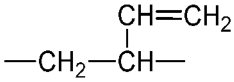
(2)

$-CH_2-CH_2-$
(3)

$-CH_2-CH=CH-CH_2-$
(4)

EP 4 253 081 A1

## Description

Cross-Reference to Related Application

The present application is based on Japanese Patent Application No. 2020-197516 filed November 27, 2020, the content of which is incorporated by reference herein.

Technical Field

The present disclosure relates to a polymer composition, a cross-linked product, and a tire.

Background Art

Conjugated diene-based polymers such as styrene-butadiene copolymers exhibit good properties, such as thermal resistance, wear resistance, mechanical strength, and molding processability, and thus have been widely used in various industrial products, such as pneumatic tires, anti-vibration rubber, and hoses. Further, conventionally, it has been proposed to obtain a vulcanized rubber having high strength and low wear by using a hydrogenated conjugated diene-based polymer in which a part of the unsaturated bonds of the conjugated diene-based polymer are hydrogenated (for example, Patent Literature 1).

Citation List

Patent Literature

Patent Literature 1: WO 2015/064646

Summary of Invention

Technical Problem

In the production of winter tires and all-season tires, polymer with a relatively low glass transition temperature (Tg) is usually used to provide vulcanized rubber with flexibility at low temperature. In vulcanized rubber prepared by using a polymer with low Tg, wear resistance and grip performance on ice are in a trade-off relationship. An attempt to confer grip performance on ice to vulcanized rubber prepared by using a polymer with low Tg tends to reduce wear resistance. To develop a rubber material for winter tires and all-season tires having balanced wear resistance and grip performance on ice, the present inventors have considered use of a hydrogenated conjugated diene-based polymer with high strength and high wear resistance.

However, the concern is that vulcanized rubber in which hydrogenated conjugated diene-based polymer is blended does not have sufficient grip performance on ice and cannot fully satisfy properties required when the vulcanized rubber is applied to winter tires and all-season tires. Furthermore, winter tires and all-season tires also need to have good rolling resistance in addition to grip performance on ice. Moreover, blending hydrogenated conjugated diene-based polymer in a polymer composition leads to a concern that processability is reduced when kneading the polymer composition.

The present disclosure has been made in view of the above problems and a primary object is to provide a highly processable polymer composition from which a vulcanized rubber having high strength and high wear resistance and excellent grip performance on ice and excellent rolling resistance can be produced.

Solution to Problem

As a result of investigating how to solve the above problems, the present inventors discovered that the above problems can be solved by combining a specific conjugated diene-based polymer and a specific additive. According to the present disclosure, the following means are provided.

[1] A polymer composition includes a conjugated diene-based polymer (A) and a liquid polymer (B). The conjugated diene-based polymer (A) includes a polymer (A1) satisfying expression (i) when a composition ratio (molar ratio) of a structural unit represented by formula (1), a structural unit represented by formula (2), a structural unit represented by formula (3) and a structural unit represented by formula (4) in the polymer is p, q, r and s, respectively. The polymer (A1) has a glass transition temperature of -40°C or less. The liquid polymer (B) is at least one selected

from the group consisting of polybutadiene and a hydrogenated product thereof, polyisoprene and a hydrogenated product thereof, a styrene-butadiene copolymer comprising a styrene content of 20% by mass or less and a hydrogenated product thereof, a styrene-isoprene copolymer and a hydrogenated product thereof, a butadiene-isoprene copolymer and a hydrogenated product thereof, an isoprene-butadiene-styrene copolymer and a hydrogenated product thereof, polyisobutylene, polybutene, an ethylene-α-olefin copolymer, an ethylene-propylene-diene copolymer and polyfarnesene.

Expression (i):

$$0.75 \leq (p + (0.5 \times r))/ (p + q + (0.5 \times r) + s) \leq 0.97$$

[F1]

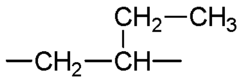
(1)

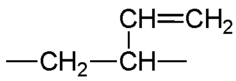
(2)

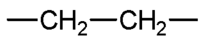
(3)

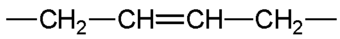
(4)

[2] A cross-linked product obtained by employing the polymer composition as described [1] above.
[3] A tire in which one or both of a tread and a sidewall are formed using the polymer composition as described [1] above.

Advantageous Effects of Invention

The present disclosure can provide a highly processable polymer composition from which a vulcanized rubber having high strength and high wear resistance and excellent grip performance on ice and excellent rolling resistance can be produced.

Description of Embodiments

<Polymer composition>

The polymer composition of the present disclosure (hereinafter also simply referred to as "the present composition") comprises a conjugated diene-based polymer (A) and a liquid polymer (B). Hereinafter, each component included in the present composition and the optionally added components will be described. In addition, in this specification, a numerical range described by using the word "to" between numerical values means that the numerical values described before and after the "to" are included as the lower limit value and the upper limit value.

<Conjugated diene-based polymer (A)>

The present composition includes, as a conjugated diene-based polymer, when a composition ratio (molar ratio) in the polymer of a structural unit represented by formula (1), a structural unit represented by formula (2), a structural unit represented by formula (3), and a structural unit represented by formula (4) are p, q, r, and s, respectively, a polymer satisfying expression (i) (hereinafter, also referred to as "polymer (A1)")

Expression (i):

$$0.75 \leq (p + (0.5 \times r))/(p + q + (0.5 \times r) + s) \leq 0.97$$

[F2]

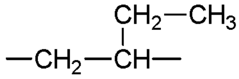

(1)

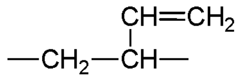

(2)

$-CH_2-CH_2-$

(3)

$-CH_2-CH=CH-CH_2-$

(4)

As the polymer (A1), a hydrogenated product of a polymer having a structural unit derived from a conjugated diene compound can be used. The polymer (A1) as a hydrogenated product can be produced by first polymerizing a monomer containing a conjugated diene compound to obtain a non-hydrogenated conjugated diene-based polymer, and then subjecting the obtained polymer to a hydrogenation reaction.

As the conjugated diene compound constituting the polymer (A1), 1,3-butadiene can be preferably used. Further, in the polymerization for obtaining the polymer (A1), a conjugated diene compound other than 1,3-butadiene may be used in addition to 1,3-butadiene. Specific examples of the conjugated diene compound other than 1,3-butadiene include isoprene, 2,3-dimethyl-1,3-butadiene, and 1,3-pentadiene. Among these, isoprene is preferable as the conjugated diene compound other than 1,3-butadiene. The conjugated diene compound may be used singly or in combination of two or more types.

The polymer (A1) is preferably a copolymer of a conjugated diene compound and an aromatic vinyl compound, from the viewpoint of increasing the strength of the cross-linked product obtained using the composition. Examples of the aromatic vinyl compound used for the polymerization include styrene, 2-methylstyrene, 3-methylstyrene, 4-methylstyrene, α-methylstyrene, N,N-dimethylaminoethylstyrene, and diphenylethylene. Among these, the aromatic vinyl compound is particularly preferably at least one of styrene and α-methylstyrene. The aromatic vinyl compound can be used singly or in combination of two or more types.

When the polymer (A1) is a copolymer of a conjugated diene compound and an aromatic vinyl compound, from the viewpoint of having high living properties in anionic polymerization, the polymer (A1) is preferably, among these, a copolymer of 1,3-butadiene and styrene. From the viewpoint that the dispersibility of a filler to be blended in the polymer composition can be improved, the polymer (A1) is preferably a random copolymer having an irregular distribution of the conjugated diene compound and the aromatic vinyl compound. The random copolymer of the conjugated diene compound and the aromatic vinyl compound may further have a block moiety composed of the conjugated diene compound or the aromatic vinyl compound, as long as the effects of the present disclosure can be obtained.

In the copolymer of the conjugated diene compound and the aromatic vinyl compound, the content of the structural unit derived from the aromatic vinyl compound is preferably 3 to 45% by mass relative to the total amount of the monomers constituting the copolymer, because strength, wear resistance, and low hysteresis loss properties can be improved and grip performance on ice can be enhanced. The content of structural unit derived from the aromatic vinyl compound is more preferably 4% by mass or more, and still more preferably 5% by mass or more, relative to the total amount of the monomers constituting the copolymer.

The content of the structural unit derived from the aromatic vinyl compound is preferably 40% by mass or less, more preferably 35% by mass or less, still more preferably 30% by mass or less, and particularly preferably 25% by mass or less relative to the total amount of the monomer units constituting the copolymer because grip performance on ice can be sufficiently improved. By setting the content of the unit derived from the aromatic vinyl compound to the above range, both productivity and strength can be achieved. The polymer (A1) includes preferably 50 to 97% by mass of the 1,3-butadiene unit, 3 to 45% by mass of the aromatic vinyl compound unit, and 0 to 30% by mass of the conjugated diene compound other than 1,3-butadiene unit, relative to 100% by mass of the total amount of the monomer units constituting the polymer (A1). Setting to such a blending ratio is preferable because the grip performance on ice can be improved in a well-balanced manner while maintaining the strength of the cross-linked product to a high level.

The above-exemplified conjugated diene compound and aromatic vinyl compound have a similar effect in that they can produce a conjugated diene-based polymer having an active terminal. Therefore, even those compounds not

described in the Examples described hereinbelow can be used in the present disclosure.

In the polymerization, a monomer other than the conjugated diene compound and the aromatic vinyl compound may be used. Examples of another monomer include acrylonitrile, methyl (meth)acrylate, and ethyl (meth)acrylate. The content of the structural unit derived from another monomer is preferably 30% by mass or less, more preferably 20% by mass or less, and still more preferably 10% by mass or less, relative to the total amount of the monomers constituting the polymer (A1).

The polymerization method for obtaining the polymer (A1) may be any of a solution polymerization method, a gas phase polymerization method, and a bulk polymerization method. A solution polymerization method is particularly preferable. Further, as the polymerization type, either a batch type or a continuous type may be used. When a solution polymerization method is used, an example of a specific polymerization method is a method in which polymerization is conducted with a monomer including the conjugated diene compound in an organic solvent in the presence of a polymerization initiator and, optionally, a randomizer.

At least one of an alkali metal compound and an alkaline earth metal compound can be used as the polymerization initiator. As the alkali metal compound and the alkaline earth metal compound, those usually used as an initiator in anionic polymerization can be used. Specific examples of the polymerization initiator include methyllithium, ethyllithium, n-propyllithium, n-butyllithium, sec-butyllithium, t-butyllithium, 1,4-dilithiobutane, phenyllithium, stillbenlithium, naphthyllithium, sodium naphthyl, potassium naphthyl, din-butylmagnesium, di-n-hexylmagnesium, ethoxypotassium, and calcium stearate. Among these, a lithium compound can be preferably used as the polymerization initiator.

The polymerization reaction may be carried out in the presence of a compound obtained by mixing at least any one of the above-mentioned alkali metal compound and alkaline earth metal compound with a compound having a functional group that interacts with silica (hereinafter, this compound is also referred to as "initiation modifier"). By carrying out the polymerization in the presence of the initiation modifier, a functional group that interacts with silica can be introduced into the polymerization initiation terminal of the polymer (A1). Further, introducing a functional group that interacts with silica into the initiation terminal of the polymer (A1) is preferable in that the low hysteresis loss performance (fuel efficiency) of vulcanized rubber can be improved.

As used herein, the term "interaction" means that a covalent bond is formed between molecules, or an intermolecular force that is weaker than a covalent bond is formed (e.g., an intermolecular electromagnetic force such as ion-dipole interaction, dipole-dipole interaction, a hydrogen bond, or Van der Waals force). A "functional group that interacts with silica" means a group having at least one atom that interacts with silica (for example, a nitrogen atom, a sulfur atom, a phosphorus atom, an oxygen atom or silicon atom). The silicon atom possessed by the "functional group that interacts with silica" is the silicon atom in the hydrocarbyloxysilyl group.

A reaction product of a lithium compound such as alkyllithium and a nitrogen-containing compound such as a secondary amine compound can be used as the initiation modifier. Examples of the nitrogen-containing compound include dimethylamine, diethylamine, dipropylamine, dibutylamine, dodecamethyleneimine, N,N'-dimethyl-N'-trimethylsilyl-1,6-diaminohexane, piperidine, pyrrolidine, hexamethyleneimine, heptamethyleneimine, dicyclohexylamine, N-methylbenzylamine, di-(2-ethylhexyl)amine, diallylamine, morpholine, N-(trimethylsilyl)piperazine, N-(tertbutyldimethylsilyl)piperazine, and 1,3-ditrimethylsilyl-1,3,5-triazinane.

In the case of carrying out the polymerization in the presence of the initiation modifier, the initiation modifier may be prepared by mixing the alkali metal compound or alkaline earth metal compound and the nitrogen-containing compound in advance, and the polymerization carried out by adding the prepared product to the polymerization system. Alternatively, the polymerization may be carried out by adding the alkali metal compound or alkaline earth metal compound and the nitrogen-containing compound to the polymerization system and mixing them in the polymerization system to prepare the initiation modifier.

The randomizer may be used to adjust the content of 1,2-vinyl bonds in the polymer obtained by the above polymerization. Examples of the randomizer include dimethoxybenzene, tetrahydrofuran, dimethoxyethane, diethylene glycol dibutyl ether, diethylene glycol dimethyl ether, 2,2-di(tetrahydrofuryl)propane, 2-(2-ethoxyethoxy)-2-methylpropane, triethylamine, pyridine, N-methylmorpholine, and tetramethylethylenediamine. The randomizer may be used singly or in combination of two or more types.

The organic solvent used for polymerization may be any organic solvent that is inert to the reaction. Examples of the organic solvent include aliphatic hydrocarbons, alicyclic hydrocarbons, and aromatic hydrocarbons. Among these, the organic solvent is preferably a C3 to C8 hydrocarbon. Specific examples of the C3 to C8 hydrocarbon include n-pentane, isopentane, n-hexane, cyclohexane, propene, 1-butene, isobutene, trans-2-butene, cis-2-butene, 1-hexene, 2-hexene, benzene, toluene, xylene, ethylbenzene, heptane, cyclopentane, methylcyclopentane, methylcyclohexane, 1-pentene, 2-pentene, and cyclohexene. These organic solvents may be used singly or in combination of two or more types.

When the solution polymerization is used, the monomer concentration of the reaction solvent is preferably 5 to 50 mass%, more preferably 10 to 30 mass%, from the viewpoint of maintaining the balance between productivity and polymerization controllability. The polymerization reaction temperature is preferably -20°C to 150°C, more preferably 0

to 120°C, particularly preferably 20 to 100°C. The polymerization reaction is preferably performed under a pressure sufficient to maintain the monomer substantially in a liquid phase. Such a pressure can be achieved by, for example, pressurizing the reactor by use of a gas employed inert to the polymerization reaction.

The 1,2-vinyl content (vinyl content) of the conjugated diene-based polymer obtained by the above polymerization is preferably 5 to 70 mol%. When the vinyl content is 5 mol% or more, the grip properties tend to be good, and when it is 70 mol% or less, good wear resistance tends to be exhibited. From this point of view, the vinyl content is more preferably 10 mol% or more, and still more preferably 15 mol% or more. Further, the vinyl content is more preferably 60 mol% or less, and still more preferably 50 mol% or less. The vinyl content is a value measured by a $^{1}$H-NMR apparatus.

By the above polymerization, a conjugated diene-based polymer having an active terminal can be obtained. To terminate the polymerization, the polymer having an active terminal may be reacted with alcohol or hydrogen, while the polymer may be reacted with a compound having a functional group that interacts with silica (hereinafter also referred to as "terminal modifier") or a coupling agent. By reacting the conjugated diene-based polymer having an active terminal with a terminal modifier, a modified conjugated diene-based polymer in which the polymerization-end terminal has been modified by a functional group which interacts with silica may be obtained as the polymer (A1). Furthermore, it is preferable to use a polymer into which a functional group that interacts with silica is introduced at the polymerization terminal as the polymer (A1) because low hysteresis loss properties can be improved. It is particularly preferred that the polymer (A1) has at least one functional group selected from the group consisting of an amino group, a nitrogen-containing heterocyclic group, a phosphino group, a hydroxyl group, a thiol group and a hydrocarbyloxysilyl group. As used herein, "active terminal" means a portion other than the structure derived from the monomer having a carbon-carbon double bond, which is present at the end of the molecular chain. The active terminal is more specifically a metal terminal.

The terminal modifier is not particularly limited as long as it is a compound having a functional group that interacts with silica and is capable of reacting with the active terminal of the conjugated diene-based polymer. Among these, the terminal modifier is preferably a compound having one atom selected from the group consisting of a nitrogen atom, a sulfur atom, a phosphorus atom, an oxygen atom, and a silicon atom, and having no active hydrogens bonded to the atom. The terminal modifier is preferably, in particular, a compound having one or more functional groups selected from the group consisting of an amino group, a group having a carbon-nitrogen double bond, a nitrogen-containing heterocyclic group, a phosphino group, a cyclic ether group, a cyclic thioether group, a protected hydroxyl group, a protected thiol group, and a hydrocarbyloxysilyl group and capable of reacting with the active terminal. The amino group is preferably a protected primary or secondary amino group, or a tertiary amino group.

The terminal modifier is preferably at least one species selected from the group consisting of the compounds represented by formula (5) and the compounds represented by formula (6).

[F3]

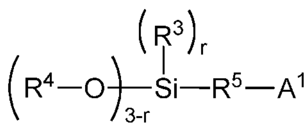

(5)

(In formula (5), $A^1$ represents a monovalent functional group which has at least one atom selected from the group consisting of nitrogen, phosphorus, oxygen, sulfur, and silicon, which does not have active hydrogen, and which is bonded to $R^5$ via a nitrogen atom, a phosphorus atom, an oxygen atom, a sulfur atom, a silicon atom, or a carbon atom contained in a carbonyl group, or a (thio)epoxy group; $R^3$ and $R^4$ each independently represent a hydrocarbyl group; $R^5$ represents a hydrocarbylene group; r is an integer of 0 to 2; when r is 2, a plurality of groups $R^3$ in the formula are the same or different; and when r is 0 or 1, a plurality of groups $R^4$ in the formula are the same or different.)

[F4]

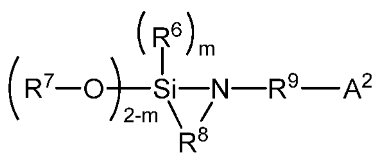

(6)

(In formula (6), $A^2$ represents a monovalent functional group which has at least one atom selected from the group

consisting of nitrogen, phosphorus, oxygen, sulfur, and silicon, which does not have active hydrogen, and which is bonded to $R^9$ via a nitrogen atom, a phosphorus atom, an oxygen atom, a sulfur atom, or a silicon atom, or a C1 to C20 hydrocarbyl group; $R^6$ and $R^7$ each independently represent a hydrocarbyl group; $R^8$ represents a hydrocarbylene group; $R^9$ represents a single bond or a hydrocarbylene group; m is 0 or 1; and when m is 0, a plurality of groups $R^7$ in the formula are the same or different.)

In formulae (5) and (6), the hydrocarbyl group represented by $R^3$, $R^4$, $R^6$, $R^7$, or $A^2$ is preferably a C1 to C20 linear or branched alkyl group, a C3 to C20 cycloalkyl group, or a C6 to C20 aryl group.

The hydrocarbylene group represented by $R^5$ or $R^9$ is preferably a C1 to C20 linear or branched alkanediyl group, a C3 to C20 cycloalkylene group, or a C6 to C20 arylene group. The hydrocarbylene group represented by $R^8$ is preferably a C1 to C20 linear or branched alkanediyl group.

From the viewpoint of enhancing the reactivity of the terminal modifier to a conjugated diene-based polymer, r is preferably 0 or 1.

When $A^1$ is the aforementioned monovalent functional group, at least one atom (contained in $A^1$) selected from the group consisting of nitrogen, phosphorus, oxygen, sulfur, and silicon may be protected with a protective group (e.g., a tri-substituted hydrocarbylsilyl group). Also, when $A^2$ is the aforementioned monovalent functional group, at least one atom (contained in $A^2$) selected from the group consisting of nitrogen, phosphorus, oxygen, sulfur, and silicon may be protected with a protective group (e.g., a tri-substituted hydrocarbylsilyl group). As used herein, the term "active hydrogen" refers to a hydrogen atom bonded to an atom other than a carbon atom, preferably a hydrogen atom having a bonding energy lower than that of a carbon-hydrogen bond of polymethylene. The protective group is a functional group for converting the group $A^1$ or $A^2$ into a functional group inactive to a polymerization active terminal. The term "(thio)epoxy group" is intended to encompass an epoxy group and a thioepoxy group.

$A^1$ may be a group that can be formed into an onium ion by an onium salt generator. When the terminal modifier has such a group ($A^1$), the terminal modifier can provide the polymer (A) with superior shape-maintaining ability. Specific examples of the group $A^1$ include a nitrogen-containing group prepared through substitution of two hydrogen atoms of a primary amino group with two protective groups, a nitrogen-containing group prepared through substitution of one hydrogen atom of a secondary amino group with one protective group, a tertiary amino group, an imino group, a pyridyl group, a phosphorus-containing group prepared through substitution of two hydrogen atoms of a primary phosphino group with two protective groups, a phosphorus-containing group prepared through substitution of one hydrogen atom of a secondary phosphino group with one protective group, a tertiary phosphino group, an epoxy group, a thioepoxy group, a group prepared through substitution of the hydrogen atom of a hydroxyl group with a protective group, a sulfurcontaining group prepared through substitution of the hydrogen atom of a thiol group with a protective group, and a hydrocarbyloxycarbonyl group. Of these, a nitrogen-atom-containing group is preferred, since it exhibits good affinity to silica. The group $A^1$ is more preferably a tertiary amino group or a nitrogen-containing group prepared through substitution of two hydrogen atoms of a primary amino group with two protective groups.

Specific examples of preferred terminal modifiers include compounds represented by formula (5), such as N,N-bis(trimethylsilyl)aminopropyltrimethoxysilane, N,N-bis(trimethylsilyl)aminopropylmethyldiethoxysilane, N,N',N'-tris(trimethylsilyl)-N-(2-aminoethyl)-3-aminopropyltriethoxysilane, N,N-dimethyl-3-(triethoxysilyl)propylamine, 3-(4-trimethylsilyl-1-piperazino)propylmethyldimethoxysilane, 3-glycidoxypropylmethyldimethoxysilane, and 3-glycidoxypropyltriethoxysilane.

Specific examples of compounds represented by formula (6) include 2,2-dimethoxy-1-(3-trimethoxysilylpropyl)-1,2-azasilolidine, 2,2-diethoxy-1-(3-trimethoxysilylpropyl)-1,2-azasilolidine, 2,2-dimethoxy-1-phenyl-1,2-azasilolidine, 1-trimethylsilyl-2,2-dimethoxy-1-aza-2-silacyclopentane, 2-(2,2-dimethoxy-1,2-azasilolidin-1-yl)-N,N-diethylethan-1-amine, 2-(2,2-dimethoxy-1,2-azasilolidin-1-yl)-N,N-dimethylethan-1-amine, and 3-(2,2-dimethoxy-1,2-azasilolidin-1-yl)-N,N-diethylpropan-1-amine. The terminal modifiers may be used singly or in combination of two or more species.

The terminal modification reaction may be, for example, a solution reaction. The solution reaction may be performed by use of a solution containing unreacted monomer after completion of polymerization reaction. Alternatively, the solution reaction may be performed through isolation of the conjugated diene-based polymer contained in the solution, and dissolution of the isolated polymer in an appropriate solvent (e.g., cyclohexane). The terminal modification reaction may be performed by a batch or continuous process. No particular limitation is imposed on the method of adding the terminal modifier. The terminal modifier may be added at one time or in a divided or continuous manner.

The amount of the terminal modifier used may be appropriately determined depending on the type of the compound used in the reaction. The amount of the terminal modifier is preferably 0.1 mole equivalents or more, more preferably 0.3 mole equivalents or more, relative to the metal atom (responsible for the polymerization reaction) of the polymerization initiator. When the amount of the terminal modifier used is adjusted to 0.1 mole equivalents or more, the modification reaction can be sufficiently progressed, and the effect of improving the dispersibility of an inorganic filler can be desirably achieved. The terminal modification reaction temperature is generally equal to the polymerization reaction temperature, and is preferably - 20 to 150°C, more preferably 0 to 120°C, particularly preferably 20 to 100°C. An excessively low modification reaction temperature tends to lead to an increase in the viscosity of the polymer solution,

whereas an excessively high modification reaction temperature promotes the inactivation of the polymerization active terminal. The terminal modification reaction time is preferably 1 minute to 5 hours, more preferably 2 minutes to 1 hour.

For the purpose of, for example, adjustment of the Mooney viscosity of the polymer (A1), the conjugated diene-based polymer having an active terminal may be reacted with a coupling agent such as silicon tetrachloride or a polyfunctional epoxy compound (e.g., tetraglycidyl-1,3-bisaminomethylcyclohexane) before, after, or during the modification reaction by use of the terminal modifier. The amount of the coupling agent used may be appropriately determined depending on, for example, the desired Mooney viscosity of the polymer (A1) or the type of the compound used for the reaction. The amount of the coupling agent is preferably 0.01 to 0.8 mole equivalents relative to the metal atom (responsible for the polymerization reaction) of the polymerization initiator. A single coupling agent may be used, or two or more coupling agents may be used in combination.

Subsequently, the polymer (A1) can be produced through hydrogenation of the above-produced modified or unmodified conjugated diene-based polymer. The hydrogenation reaction may be performed by any method under any conditions, so long as the resultant conjugated diene-based polymer exhibits a desired percent hydrogenation. Examples of the hydrogenation method include a method involving the use of a hydrogenation catalyst containing an organic titanium compound as a main component; a method involving the use of a catalyst containing an organic compound of iron, nickel, or cobalt and an organic metal compound (e.g., an alkylaluminum); a method involving the use of an organic complex of an organic metal compound of, for example, ruthenium or rhodium; and a method involving the use of a catalyst including a carrier (e.g., carbon, silica, or alumina) on which a metal (e.g., palladium, platinum, ruthenium, cobalt, or nickel) is supported. Industrially preferred is a method involving hydrogenation under mild conditions (low pressure and low temperature) by use of a homogeneous catalyst containing an organic titanium compound only, or containing an organic titanium compound and an organic compound of a metal (lithium, magnesium, or aluminum) (Japanese Kokoku Patent Publication Nos. S63-4841 and H01-37970). Such a hydrogenation method achieves high hydrogenation selectivity to a double bond of butadiene, and is suitable for the object of the present disclosure.

The hydrogenation of the conjugated diene-based polymer is performed in a solvent that is inert to a catalyst and can dissolve the conjugated diene-based polymer. Examples of preferred solvents include aliphatic hydrocarbons, such as n-pentane, n-hexane, and n-octane; alicyclic hydrocarbons, such as cyclohexane and cycloheptane; aromatic hydrocarbons, such as benzene and toluene; and ethers, such as diethyl ether and tetrahydrofuran. These solvents may be used singly. Alternatively, a mixture containing such a solvent as a main component may be used.

In general, the hydrogenation reaction is performed through the following procedure: the conjugated diene-based polymer is maintained at a predetermined temperature in a hydrogen or inert atmosphere, a hydrogenation catalyst is added under stirring or nonstirring, and hydrogen gas is introduced to thereby increase the pressure to a predetermined level. The term "inert atmosphere" refers to an atmosphere that causes no reaction to the participants in the hydrogenation reaction; for example, a helium, neon, or argon atmosphere. Air or oxygen is not preferred, since it causes inactivation of a catalyst through, for example, oxidation of the catalyst. Nitrogen is not also preferred, since it acts as a catalyst poison during the hydrogenation reaction to thereby reduce hydrogenation activity. Most preferably, the hydrogenation reactor is filled with a hydrogen gas atmosphere alone.

The hydrogenation reaction process for producing the hydrogenated conjugated diene-based polymer may be a batch process, a continuous process, or a mixture thereof. In the case where the hydrogenation catalyst is a titanocene diaryl compound, the compound may be added as is to the reaction mixture, or may be added in the form of a solution of the compound in an inert organic solvent. The inert organic solvent used when the catalyst is used in the form of a solution may be any solvent that does not react with the participants in the hydrogenation reaction. Preferably, the inert organic solvent is identical to the solvent used in the hydrogenation reaction. The amount of the catalyst added is 0.02 to 20 mmol relative to 100 g of the conjugated diene-based polymer before hydrogenation.

The polymer (A1) is a conjugated diene-based polymer satisfying the above expression (i). More specifically, the polymer (A1) has a value specified by expression (ii) (hereinafter also referred to as "value θ") of 0.75 or more and 0.97 or less. By setting θ to 0.75 or more, a cross-linked product which has sufficiently high strength and wear resistance and in which change in hardness due to heat aging is sufficiently reduced can be obtained. For this reason, θ is preferably 0.78 or more, more preferably 0.80 or more, and still more preferably 0.85 or more. Furthermore, θ is 0.97 or less, preferably 0.95 or less so as to perform crosslinking reaction sufficiently.

Expression (ii):

$$\theta = (p+(0.5\times r))/(p+q+(0.5\times r)+s)$$

The value θ defined by the above expression (ii) corresponds to the hydrogenation rate of the polymer (A1). For example, when θ is 0.75, the hydrogenation rate of the polymer (A1) is 75%. When θ is 0.97, the hydrogenation rate of the polymer (A1) is 97%. The hydrogenation rate of the polymer can be adjusted, for example, by controlling the

amount of accumulation of hydrogen supplied while regulating the duration of hydrogenation reaction. In the present description, the hydrogenation ratio is measured by a $^1$H-NMR apparatus.

The polymer (A1) is preferably produced through a method in which a monomer containing 1,3-butadiene is subjected to solution polymerization in the presence of an alkali metal compound, and the resultant polymer solution is subjected to terminal modification reaction and then hydrogenation reaction. This method is industrially advantageous. In this case, the polymer (A1) can be isolated by removing the solvent from the above-prepared solution. The polymer can be isolated through a known solvent removal method (e.g., steam stripping) or a drying operation such as thermal treatment.

The polymer (A1) has a weight average molecular weight (Mw) of preferably $1.0 \times 10^5$ to $2.0 \times 10^6$. When the Mw is $1.0 \times 10^5$ or more, the resultant cross-linked product achieves sufficiently high wear resistance and fuel efficiency. When the weight average molecular weight is $2.0 \times 10^6$ or less, the present composition exhibits favorable processability, which is preferred. The weight average molecular weight of the polymer (A1) is more preferably $1.1 \times 10^5$ or more, still more preferably $1.2 \times 10^5$ or more. The weight average molecular weight of the polymer (A1) is more preferably $1.5 \times 10^6$ or less, still more preferably $1.2 \times 10^6$ or less. As used herein, the weight average molecular weight of a polymer is measured through gel permeation chromatography (GPC) as reduced to polystyrene, and corresponds to the overall peak weight average molecular weight (total weight average molecular weight).

To obtain a cross-linked product having excellent grip performance on ice and rolling resistance, the polymer (A1) has a glass transition temperature (Tg) of - 40°C or less, preferably -42°C or less, further preferably -45°C or less, and still more preferably -46°C or less. Furthermore, to obtain a cross-linked product having high strength and high wear resistance, the polymer (A1) has a Tg of -70°C or more. In the present description, the Tg of the polymer is measured by a differential scanning calorimetry (DSC) apparatus according to ASTM D3418.

Setting Tg of the conjugated diene-based polymer with high hydrogenation ratio blended in the polymer composition high improves processability of the polymer composition in kneading and improves handling properties of the polymer composition in the process of production. Meanwhile, the concern is that high Tg of the conjugated diene-based polymer with high hydrogenation ratio reduces flexibility under conditions of use to limit application to winter tires and the like, or reduces rolling resistance. In this respect, the present composition in which a specific liquid polymer is blended together with the conjugated diene-based polymer with high hydrogenation ratio is advantageous in that it has good processability in kneading of the polymer composition even when the conjugated diene-based polymer with high hydrogenation ratio has low Tg, has high grip performance on ice and can provide a vulcanized rubber having excellent rolling resistance.

The composition may contain only the polymer (A1) as the conjugated diene-based polymer (A). Also, the composition may further contain a polymer different from the polymer (A1). The polymer different from the polymer (A1) is preferably a non-hydrogenated conjugated diene-based polymer (hereinafter, also referred to as "polymer (A2)"). Examples of the polymer (A2) include natural rubber (NR), styrene-butadiene rubber (SBR), butadiene rubber (BR; for example, high-cis BR having 90% or more of cis-1,4 bonds, syndiotactic-1,2-polybutadiene (SPB) - containing BR, and the like), isoprene rubber (IR), styrene isoprene copolymer rubber, and butadiene isoprene copolymer rubber. Of these, the polymer (A2) is preferably NR, BR and SBR.

The polymer (A2) can be produced by the same method as described for polymer (A1) except that the hydrogenation reaction is not carried out in the method for producing polymer (A1). Regarding the monomer unit constituting the polymer (A2) and the preferable range of the various physical property values, such as the weight average molecular weight, the content of the aromatic vinyl compound unit, the vinyl content, and the glass transition temperature of the polymer (A2), the description made in relation to polymer (A1) is incorporated here.

The content of the polymer (A1) in the composition is preferably 50% by mass or more relative to the total amount of the conjugated diene-based polymer (A) included in the composition to obtain a cross-linked product having excellent strength and wear resistance. From the regard, the content of the polymer (A1) is more preferably 60% by mass or more, still more preferably 700 by mass or more, and even further more preferably 80% by mass or more, relative to the total amount of the conjugated diene-based polymer (A).

Furthermore, the content of the polymer (A1) is preferably 50% by mass or more, more preferably 60% by mass or more, further preferably 80% by mass or more, and still more preferably 90% by mass or more relative to the total amount of the rubber components in the polymer composition in order to obtain durability and wear resistance of the cross-linked product resulting from the present composition. The conjugated diene-based polymer (A) may be used singly or in combination of two or more types.

As used herein, the "rubber component" included in the polymer composition means a polymer capable of obtaining a cured product that exhibits rubber elasticity by thermosetting. At room temperature, this cured product undergoes a large deformation by a small force (for example, a two-fold deformation or more when stretched at room temperature), and rapidly returns to almost its original shape when the force is removed. In the present description, the liquid polymer (B) is a component different from the rubber component.

<Liquid polymer (B)>

The liquid polymer (B) blended in the present composition has fluidity at room temperature (23°C). A liquid polymer having a structural unit derived from an unsaturated hydrocarbon monomer may be preferably used as the liquid polymer (B). Examples of liquid polymers (B) include polybutadiene, polyisoprene, polyisobutylene, polybutene, a styrene-butadiene copolymer having a styrene content of 20% by mass or less, a styrene-isoprene copolymer, a butadiene-isoprene copolymer, an isoprene-butadiene-styrene copolymer, an ethylene-α-olefin copolymer, an ethylene-propylene-diene copolymer and polyfarnesene. These liquid polymers may be hydrogenated.

More specifically, the composition comprises, as the liquid polymer (B), at least one selected from the group consisting of polybutadiene and a hydrogenated product thereof, polyisoprene and a hydrogenated product thereof, a styrene-butadiene copolymer having a styrene content of 20% by mass or less and a hydrogenated product thereof, a styrene-isoprene copolymer and a hydrogenated product thereof, a butadiene-isoprene copolymer and a hydrogenated product thereof, an isoprene-butadiene-styrene copolymer and a hydrogenated product thereof, polyisobutylene, polybutene, an ethylene-α-olefin copolymer, an ethylene-propylene-diene copolymer and polyfarnesene. These liquid polymers may be a modified body having at least one functional group selected from the group consisting of an amino group, a nitrogen-containing heterocyclic group, a phosphino group, a hydroxyl group, a carboxy group, an acid anhydride group, a thiol group and a hydrocarbyloxysilyl group.

When the liquid polymer (B) is a modified body, examples of liquid polymers (B) include maleic anhydridemodified polybutadiene, maleic acid-modified polybutadiene, a hydroxyl-terminated polybutadiene, carboxyl-terminated polybutadiene and hydroxyl /carboxyl-terminated polybutadiene, and a polymer prepared by modifying a polymer listed as the liquid polymer (B) in the same manner as in the case of the polymer (A1). The modified polymer may be synthesized by using a modifier having one or more functional groups selected from the group consisting of, for example, an amino group (a protected primary amino group, a protected secondary amino group or a tertiary amino group), a nitrogen-containing heterocyclic group, a phosphino group, a protected hydroxyl group, a protected carboxy group, an acid anhydride group, a protected thiol group and a hydrocarbyloxysilyl group.

The molecular weight of the liquid polymer (B) is not particularly limited. The liquid polymer (B) has, for example, a number average molecular weight (Mn) of preferably 600 or more, more preferably 700 or more. The liquid polymer (B) has an Mn of preferably 50,000 or less, more preferably 40,000 or less and still more preferably 30,000 or less.

The liquid polymer (B) is commercially available. Examples of commercially available liquid polymers (B) used for preparing the present composition include trade name LIR-30, LIR-50, LIR-310, LIR-390, LIR-403, LIR-102M, LIR-290, LBR-302, LBR-302, LBR-307, LBR-352, LBR-352, L-SBR-820, L-SBR-841 (all made by Kuraray Co., Ltd.), NISSO-PB B-1000, NISSO-PB B-2000, NISSO-PB B-3000, NISSO-PB G-1000, NISSO-PB G-2000, NISSO-PB G-3000, NISSO-PB BI-2000, NISSO-PB BI-3000, NISSO-PB JP-200, NISSO-PB GQ-1000 (all made by Nippon Soda Co., Ltd.), HV-35 (made by ENEOS Corporation), LUCANT series (made by Mitsui Chemicals, Inc.), Ricon 130, Ricon 131, Ricon 150, Ricon 130MA8, Ricon 130MA13, Krasol LBH2000, Krasol LBH-P2000, Krasol LBH3000, Krasol LBH-P3000 (all made by Cray Valley). The liquid polymer (B) may be used singly or in combination of two or more types.

Of the above polymers, a liquid polymer which does not have a styrene unit is preferred as the liquid polymer (B) to obtain the cross-linked product having even better fuel efficiency by using the composition. More specifically, at least one selected from the group consisting of polybutadiene, polyisoprene, polyisobutylene, polybutene, a butadiene-isoprene copolymer, an ethylene-α-olefin copolymer, an ethylene-propylene-diene copolymer, hydrogenated polybutadiene, hydrogenated polyisoprene and a hydrogenated butadiene-isoprene copolymer is preferred.

The content of the liquid polymer (B) in the composition is not particularly limited as long as the effect of the present disclosure is obtained. It is preferable that the content of the liquid polymer (B) is 1 part by mass or more relative to 100 parts by mass of the conjugated diene-based polymer (A) in the composition. A content of the liquid polymer (B) in that range is preferred because it provides a cross-linked product having good grip performance on ice and a polymer composition having good processability. The content of the liquid polymer (B) is more preferably 2 parts by mass or more, still more preferably 5 parts by mass or more, relative to 100 parts by mass of the conjugated diene-based polymer (A) from the above point of view. To suppress reduction of strength and wear resistance of the cross-linked product, the content of the liquid polymer (B) is preferably 50 parts by mass or less, more preferably 40 parts by mass or less, further preferably 35 parts by mass or less, still more preferably 30 parts by mass or less, and particularly preferably 20 parts by mass or less, relative to 100 parts by mass of the total amount of the conjugated diene-based polymer (A).

<Other components>

The present composition may also include the following components in addition to the conjugated diene-based polymer (A) and the liquid polymer (B).

· Water-soluble component (C)

The composition may also include at least one selected from the group consisting of a water-soluble particle and a water-soluble fiber (hereinafter also referred to as "water-soluble component (C)"). Inclusion of the water-soluble component (C) in the composition is preferred because grip performance on ice can be further improved. The water-soluble component (C) is not particularly limited as long as it is dissolvable or swellable in water at room temperature. For example, a substance having a solubility in water at 25°C of 1.2 g/ 100 g-$H_2O$ or more may be used as the water-soluble component (C).

The water-soluble particles are, for example, water-soluble inorganic particles and organic particles. Examples of water-soluble inorganic particles include particles of chlorides, such as sodium chloride, potassium chloride, and magnesium chloride; particles of sulfates, such as sodium sulfate, potassium sulfate, and magnesium sulfate; particles of carbonates, such as sodium carbonate and sodium hydrogencarbonate; particles of phosphates, such as sodium hydrogenphosphate; and particles of hydroxides, such as sodium hydroxide and potassium hydroxide.

Examples of water-soluble organic particles include particles of lignin sulfonates, such as sodium lignin sulfonate, potassium lignin sulfonate, calcium lignin sulfonate, magnesium lignin sulfonate, and ammonium lignin sulfonate; particles of resins, such as polyvinyl alcohol or derivatives thereof (e.g., partially acetylated product, carboxylate-modified polyvinyl alcohol, and sulfonate-modified polyvinyl alcohol), alkali salts of poly(meth)acrylic acid, and alkali salts of (meth)acrylic acid/(meth)acrylic acid ester copolymer; and particles of saccharides, such as monosaccharides, oligosaccharides, and polysaccharides.

Specific examples of saccharides include monosaccharides, such as glucose, fructose, and galactose; oligosaccharides, such as sucrose, lactose, maltose, raffinose, maltotriose, trehalose, and palatinose; and polysaccharides, such as starch, dextrin, glycogen, glucan, xanthan gum, galactomannan (e.g., guar gum or fenugreek gum), cyclodextrin (e.g., $\alpha$-cyclodextrin, $\beta$-cyclodextrin, or $\gamma$-cyclodextrin), methyl cellulose, ethyl cellulose, and carboxymethyl cellulose. These types of water-soluble particles may be used singly or in combination of two or more species.

A water-soluble particle in various forms such as powder, granules and microbeads may be used. It is preferable that water-soluble particles used as the water-soluble component (B) is a solid water-soluble particle. To obtain sufficient effects of improving grip performance on ice, the water-soluble particle has a median particle size of preferably 1 $\mu$m or more, more preferably 2 $\mu$m or more. To have both grip performance on ice and wear resistance in a balanced way, the water-soluble particle has a median particle size of preferably 1,000 $\mu$m or less, more preferably 500 $\mu$m or less. In the present description, the median particle size of the water-soluble particle means the median diameter (D50), which is measured by a laser diffraction/ scattering method.

A water-soluble or water-swellable short fiber may be used as the water-soluble fiber. More specifically, the water-soluble fiber has a fiber length of preferably 1 mm or more, more preferably 2 mm or more, and still more preferably 4 mm or more to obtain sufficient effects of improving grip performance on ice. The water-soluble fiber has a fiber length of preferably 30 mm or less, more preferably 20 mm or less, and still more preferably 15 mm or less to suppress reduction of wear resistance and processability. The water-soluble fiber has a diameter (average diameter) of preferably 5 $\mu$m or more, more preferably 10 $\mu$m or more. The water-soluble fiber has an average diameter of preferably 50 $\mu$m or less, more preferably 30 $\mu$m or less, and still more preferably 20 $\mu$m or less.

Examples of water-soluble fibers include a fiber composed mainly of substances illustrated in the description of the water-soluble organic particles. In particular, at least one selected from the group consisting of a polyvinyl alcohol fiber and polysaccharide fiber may be preferably used as the water-soluble fiber. The water-soluble fiber may be used singly or in combination of two or more types.

The content of the water-soluble component (C) in the composition is not particularly limited as long as the effect of the present disclosure is obtained, and the content is preferably 0.1 to 40 parts by mass relative to 100 parts by mass of the conjugated diene-based polymer (A). A content of the water-soluble component (C) in that range is preferred because it provides a vulcanized rubber having good grip performance on ice while maintaining wear resistance. The content of the water-soluble component (C) is preferably 0.5 part by mass or more, more preferably 1 part by mass or more, relative to 100 parts by mass of the conjugated diene-based polymer (A) from the above point of view. To suppress reduction of wear resistance of the cross-linked product, the content of the water-soluble component (C) is preferably 30 parts by mass or less, more preferably 25 parts by mass or less, further preferably 20 parts by mass or less, and still more preferably 10 parts by mass or less, relative to 100 parts by mass of the conjugated diene-based polymer (A).

· Other rubber components

The composition may contain only the conjugated diene-based polymer (A) as a rubber component. Also, the composition may contain, in addition to the conjugated diene-based polymer (A), a rubber component different from the conjugated diene-based polymer (A) (hereinafter may be referred to as "other rubber component"), so long as the effects

of the present disclosure are not impaired. Examples of the type of such other rubber component include, but are not particularly limited to, halogenated butyl rubber. The amount of the other rubber component is preferably 60 mass% or less, more preferably 40 mass% or less, relative to the total amount of the rubber components (the conjugated diene-based polymer (A) and the other rubber component) contained in the polymer composition.

· Silica, etc.

The present composition preferably contains at least one species selected from the group consisting of silica and carbon black (hereinafter may be referred to as "silica, etc."). Silica is preferred, since it achieves favorable static/dynamic ratio and low hysteresis loss property. Carbon black is preferred, since it exhibits a high effect of improving the strength of the polymer composition and vulcanized rubber. Examples of the silica include wet silica (hydrated silica), dry silica (silicic anhydride), and colloidal silica. Of these, wet silica is preferred. Examples of the carbon black include furnace black, acetylene black, thermal black, channel black, and graphite. Of these, furnace black is preferred.

In the composition, the total amount of silica and carbon black is preferably 40 to 150 parts by mass relative to 100 parts by mass of the rubber components contained in the polymer composition. The amount of silica, etc. is preferably 40 parts by mass or more, since the effect of improving the strength of the resultant vulcanized rubber can be sufficiently achieved. Meanwhile, the amount of silica, etc. is preferably 150 parts by mass or less, since the wear resistance of the vulcanized rubber can be sufficiently secured. The amount of silica, etc. is preferably 50 parts by mass or more, more preferably 55 parts by mass or more, relative to 100 parts by mass of the total amount of the rubber components. Meanwhile, the amount of silica, etc. is preferably 150 parts by mass or less, more preferably 140 parts by mass or less, relative to 100 parts by mass of the total amount of the rubber components.

· Crosslinking agent

The composition preferably contains a crosslinking agent. No particular limitation is imposed on the type of the crosslinking agent to be used. Specific examples of the crosslinking agent include organic peroxides, phenolic resins, sulfur, sulfur compounds, p-quinone, p-quinone dioxime derivatives, bismaleimide compounds, epoxy compounds, silane compounds, amino resins, polyols, polyamines, triazine compounds, and metal soaps. The crosslinking agent to be used is preferably at least one species selected from the group consisting of organic peroxides, phenolic resins, and sulfur. These crosslinking agents may be used singly or in combination of two or more species.

Examples of the organic peroxide include 1,3-bis(t-butylperoxyisopropyl)benzene, 2,5-dimethyl-2,5-bis(t-butylperoxy)hexyne-3, 2,5-dimethyl-2,5-bis(t-butylperoxy)hexene-3, 2,5-dimethyl-2,5-bis(t-butylperoxy)hexane, 2,2'-bis(t-butylperoxy)-p-isopropylbenzene, dicumyl peroxide, di-t-butyl peroxide, and t-butyl peroxide.

Examples of the phenolic resin include p-substituted phenolic compounds represented by formula (7), o-substituted phenol-aldehyde condensates, m-substituted phenol-aldehyde condensates, and brominated alkylphenolaldehyde condensates. Of these, p-substituted phenolic compounds are preferred. Such a p-substituted phenolic compound can be prepared through condensation reaction between p-substituted phenol and an aldehyde (preferably formaldehyde) in the presence of an alkali catalyst.

[F5]

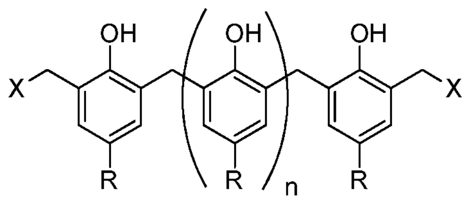

(7)

(In formula (7), X represents a hydroxyl group, a halogenated alkyl group, or a halogen atom; R represents a C1 to C15 monovalent saturated hydrocarbon group; and n is an integer of 0 to 10.)

Examples of commercially available phenolic resins include product name "Tackirol 201" (alkylphenol-formaldehyde resin, manufactured by Taoka Chemical Company, Limited), product name "Tackirol 250-I" (brominated alkylphenol-formaldehyde resin (percent bromination: 4%), manufactured by Taoka Chemical Company, Limited), product name "Tackirol 250-III" (brominated alkylphenol-formaldehyde resin, manufactured by Taoka Chemical Company, Limited), product name "PR-4507" (manufactured by Gun Ei Chemical Industry Co., Ltd.), product name "ST137X" (manufactured by Rohm & Haas Company), product name "Sumilite Resin PR-22193" (manufactured by Sumitomo Durez Co., Ltd.), product name "Tamanol 531" (manufactured by Arakawa Chemical Industries, Ltd.), product name "SP1059", product name "SP1045", product name "SP1055", and product name "SP1056" (manufactured by Schenectady), and product name "CRM-0803" (manufactured by Showa Union Gosei Co., Ltd.). Of these, "Tackirol 201" is preferably used.
The amount of the crosslinking agent is preferably 0.01 to 20 parts by mass, more preferably 0.1 to 15 parts by mass, still more preferably 0.5 to 10 parts by mass, relative to 100 parts by mass of the total amount of the rubber components contained in the polymer composition.

· Resin component

A resin component (excluding the liquid polymer (B)) may also be blended in the present composition together with the rubber component. The type of the resin component is not particularly limited, and examples thereof include a polyolefin resin such as polyethylene and polypropylene. When the resin component is blended therein, the amount of the resin component blended is preferably 1 to 50 parts by mass, and more preferably 5 to 40 parts by mass relative to 100 parts by mass of the total amount of the rubber component in the polymer composition.
The composition may contain, in addition to the aforementioned components, any additive that is commonly used in a polymer composition for producing vulcanized rubber for various applications, such as tires, hoses, vibration-proof products, and belts. Examples of the additive include an antioxidant, zinc oxide, stearic acid, a softener, sulfur, and a vulcanization accelerator. The amount of such an additive incorporated into the polymer composition may be appropriately determined depending on the type of the additive, so long as the effects of the present disclosure are not impaired.

<<Cross-linked product and tire>>

The cross-linked product of the present disclosure can be produced through crosslinking treatment of the aforementioned polymer composition. When the cross-linked product is a rubber molded product, generally, the polymer composition is formed into a predetermined shape and then subjected to crosslinking treatment. The rubber molded product can be produced through a customary method. For example, in the production of a tire, the aforementioned polymer composition is mixed by means of a mixing machine such as a roll or a mixer and then formed into a predetermined shape, and the resultant product is placed at a predetermined position and then subjected to vulcanization molding through a customary method, to thereby form either or both of a tread and a sidewall. A pneumatic tire is thereby produced.
The cross-linked product (specifically, vulcanized rubber) of the present disclosure, exhibits excellent mechanical strength, and thus can be used in various rubber molded products. Specifically, the cross-linked product may be used for the following applications: materials for treads or sidewalls of tires; rolls or vibration-proof rubbers for industrial machines and facilities; hoses and hose covers, such as diaphragm, radiator hose, and air hose; sealing materials, such as packing, gasket, weather strip, O-ring, and oil seal; belts, such as belts for power transmission; and materials for linings, dust boots, wire harnesses, and shoe soles. Among these, the cross-linked product of the present disclosure is suitably applied to a tire member, an anti-vibration member, a belt member, a roll member, a hose member, a wire harness member, and a shoe sole member, and more suitably applied to a tire member, an anti-vibration member, a roll member, and a belt member.
The cross-linked product of the present disclosure has high strength and high wear resistance, and also has excellent grip performance on ice and rolling resistance. Thus, the cross-linked product of the present disclosure is particularly suitable as a tire member, in particular winter tires and all-season tires. Of those, it is particularly suitable as a material for one or both of a tire tread and a sidewall.

Examples

The following will specifically describe the present disclosure with reference to examples, but the present disclosure is not limited to these examples. Unless otherwise specified, the word "part(s)" and the symbol "%" described in the examples and comparative examples refer to part(s) by mass and % by mass. The methods for measuring the various physical properties are now shown below.
[Styrene content (% by mass)]: Measured using an $^1$H-NMR apparatus at 400 MHz.
[Vinyl content (mol%)]: Measured using an $^1$H-NMR apparatus at 400 MHz.
[Hydrogenation rate (%)] and [θ]: Determined using a $^1$H-NMR apparatus at 500 MHz.
[First peak molecular weight]: Determined in terms of polystyrene from the retention time corresponding to the apex of the maximum peak of a GPC curve obtained using a gel permeation chromatograph (HLC-8120GPC (product

name (manufactured by Tosoh Corporation))).
[Total weight average molecular weight]: Determined in terms of polystyrene from a GPC curve obtained using a gel permeation chromatograph (HLC-8120GPC (product name (manufactured by Tosoh Corporation))).

(GPC conditions)

| | |
|---|---|
| Columns: | 2 columns, product name "GMHXL" |
| Column temperature: | 40°C |
| Mobile phase: | tetrahydrofuran |
| Flow velocity: | 1.0 ml/min |
| Sample concentration: | 10 mg/20 ml |

[Glass transition temperature Tg (°C)]: Measured using a differential scanning calorimetry (DSC) device in accordance with ASTM D3418.

<Production of hydrogenation catalyst>

[Synthesis of catalyst E]

A three-necked flask (volume: 1 L) equipped with a stirrer and a dropping funnel was purged with dry nitrogen, and anhydrous tetrahydrofuran (200 mL) and tetrahydrofurfuryl alcohol (0.2 mol) were added to the flask. Thereafter, n-butyllithium/cyclohexane solution (0.2 mol) was added dropwise to the three-necked flask at 15°C to allow reaction to proceed, to thereby prepare a tetrahydrofuran solution of tetrahydrofurfuryloxylithium.
Subsequently, a three-necked flask (volume: 1 L) equipped with a stirrer and a dropping funnel was purged with dry nitrogen, and bis(η5-cyclopentadienyl)titanium dichloride (49.8 g, 0.2 mol) and anhydrous tetrahydrofuran (250 mL) were added to the flask. The tetrahydrofuran solution of tetrahydrofurfuryloxylithium prepared as described above was added dropwise to the flask under stirring at room temperature over about 1 hour. After the elapse of about 2 hours, a red-brown liquid was subjected to filtration, and insoluble matter was washed with dichloromethane.
Thereafter, the filtrate was mixed with the washing, and the solvent was removed under reduced pressure, to thereby produce a catalyst E [bis(η-5-cyclopentadienyl) titanium (tetrahydrofurfuryloxy)chloride] (hereinafter may be referred to as "[chlorobis(2,4-cyclopentadienyl)titanium(IV) tetrahydrofurfurylalkoxide]"). The yield of the catalyst was 95%.

<Production of conjugated diene-based polymer>

[Production Example 1: Synthesis of conjugated diene-based polymer A-1]

An autoclave reaction vessel that had been purged with nitrogen and had an internal volume of 50 liters was charged with 25900 g of cyclohexane, 26 g of tetrahydrofuran, 1273 g of styrene, and 2361 g of 1,3-butadiene. The temperature of the contents of the reaction vessel was adjusted to 45°C, and then a cyclohexane solution including n-butyllithium (39 mmol) was added to initiate polymerization. The polymerization was carried out under adiabatic conditions, and the maximum temperature reached 80°C.
After it had been confirmed that the polymerization conversion rate had reached 99%, 111 g of 1,3-butadiene was added, and polymerization was carried out for a further 5 minutes to obtain a reaction solution including a polymer. The obtained reaction solution was charged with 2 mmol of silicon tetrachloride, the reaction was carried out for 10 minutes, then 28 mmol of N,N-dimethyl-3-(triethoxysilyl)propylamine was added, and the reaction was carried out for 20 minutes.
Next, the temperature of the system was raised to 80°C or higher, hydrogen was introduced into the system, and then 3.2 g of diethylaluminum chloride, 2.4 g of the catalyst E, and then n-butyllithium (15 mmol) were added. A hydrogenation reaction was carried out by supplying hydrogen so that the hydrogen pressure was maintained at 0.7 MPa or higher and a predetermined integrated hydrogen value was obtained. The reaction solution was then returned to normal temperature and pressure, and extracted from the reaction vessel to obtain a polymer solution containing a hydrogenated conjugated diene-based polymer.
The obtained polymer solution was charged with 1.4 g of 2,6-di-tert-butyl-p-cresol. Next, an aqueous solution (temperature: 80°C) adjusted to pH 8.5 (pH at 80°C according to a glass electrode method) with ammonia, which is a

pH adjuster, was placed in a desolvation tank, the above polymer solution was added (in a proportion of 1000 parts by mass of the above aqueous solution relative to 100 parts by mass of the polymer solution), desolvation was performed by steam stripping (steam temperature: 190°C) for 2 hours at the 95°C temperature of the liquid phase of the desolvation tank, and drying was carried out using a heat roll adjusted to 110°C to obtain a conjugated diene-based polymer A-1. The analytical values of the obtained conjugated diene-based polymer A-1 are shown in Table 2. The conjugated diene-based polymer A-1 had a first peak molecular weight of $20\times10^4$, a weight average molecular weight (total weight average molecular weight) of $34\times10^4$, a hydrogenation rate of 93% ($\theta$ = 0.93), and a glass transition temperature of -34°C.

[Production Examples 2 to 7 and 9: Synthesis of conjugated diene-based polymers A-2 to A-7 and A-9]

Conjugated diene-based polymers A-2 to A-7 and A-9 were each obtained by performing polymerization in the same manner as in Production Example 1, except that the used raw materials and the hydrogen supply amount were changed as shown in Table 1. Table 2 shows the analytical values of conjugated diene-based polymers A-2 to A-7 and A-9.

[Production Example 8: Synthesis of conjugated diene-based polymer A-8]

An autoclave reaction vessel that had been purged with nitrogen and had an internal volume of 50 liters was charged with 25900 g of cyclohexane, 26 g of tetrahydrofuran, 1273 g of styrene, and 2361 g of 1,3-butadiene. The temperature of the contents of the reaction vessel was adjusted to 45°C, and then a cyclohexane solution including n-butyllithium (39 mmol) was added to initiate polymerization. The polymerization was carried out under adiabatic conditions, and the maximum temperature reached 80°C.

After it had been confirmed that the polymerization conversion rate had reached 99%, 111 g of butadiene was added, and polymerization was carried out for a further 5 minutes to obtain a reaction solution including a polymer. The obtained reaction solution was charged with 2 mmol of silicon tetrachloride, the reaction was carried out for 10 minutes, then 28 mmol of N,N-dimethyl-3-(triethoxysilyl)propylamine was added, and the reaction was carried out for 20 minutes. Next, the temperature of the reaction solution was raised to 80°C or higher, hydrogen was introduced into the system, then the reaction solution was returned to normal temperature and pressure, and extracted from the reaction vessel to obtain a polymer solution containing a conjugated diene-based polymer.

The obtained polymer solution was charged with 1.4 g of 2,6-di-tert-butyl-p-cresol. Next, an aqueous solution (temperature: 80°C) adjusted to pH 8.5 (pH at 80°C according to a glass electrode method) with ammonia, which is a pH adjuster, was placed in a desolvation tank, the above polymer solution was added (in a proportion of 1000 parts by mass of the above aqueous solution relative to 100 parts by mass of the polymer solution), desolvation was performed by steam stripping (steam temperature: 190°C) for 2 hours at the 95°C temperature of the liquid phase of the desolvation tank, and drying was carried out using a heat roll adjusted to 110°C to obtain a conjugated diene-based polymer A-8. The obtained conjugated diene-based polymer A-8 had a first peak molecular weight of $20\times10^4$, a weight average molecular weight (total weight average molecular weight) of $34\times10^4$, and a glass transition temperature of -40°C. The conjugated diene-based polymer A-8 had a hydrogenation rate of 0%, $\theta$ = 0.

[Table 1]

| | | Production Example 1 | Production Example 2 | Production Example 3 | Production Example 4 | Production Example 5 | Production Example 6 | Production Example 7 | Production Example 8 | Production Example 9 |
|---|---|---|---|---|---|---|---|---|---|---|
| Type of polymer | | A-1 | A-2 | A-3 | A-4 | A-5 | A-6 | A-7 | A-8 | A-9 |
| Polymerization formulation | | | | | | | | | | |
| Solent | | | | | | | | | | |
| : Cyclohexane | (g) | 25900 | 25900 | 25900 | 25900 | 25900 | 25900 | 25900 | 25900 | 25900 |
| Vinyl-content adjusting agent | | | | | | | | | | |
| : Tetrahydrofuran | (g) | 26 | 67 | 67 | 28 | 64 | 18 | 180 | 26 | 26 |
| Monomer | | | | | | | | | | |
| : Styrene | (g) | 1273 | 740 | 370 | 370 | 740 | 370 | 1490 | 1273 | 1273 |
| : Butadiene | (g) | 2361 | 2894 | 3264 | 3264 | 2894 | 3264 | 2144 | 2361 | 2361 |
| : Additional butadiene | (g) | 111 | 111 | 111 | 111 | 111 | 111 | 111 | 111 | 111 |
| Polymerization initiator | | | | | | | | | | |
| : n-butyllithium | (mmol) | 39 | 39 | 39 | 39 | 39 | 39 | 39 | 39 | 39 |
| : Compound A | (mmol) | - | - | 27 | - | - | - | - | | |
| Amine-based modifier | | | | | | | | | | |
| : Compound B | (mmol) | 28 | 28 | 28 | 28 | 28 | 28 | 28 | 28 | 28 |
| Coupling agent | | | | | | | | | | |
| : Compound C | (mmol) | 2 | 2 | 2 | 2 | 2 | 2 | 2 | 2 | 2 |

In Table 1, the abbreviations of the compounds represent the following compounds.

| | |
|---|---|
| Compound A: | Piperidine |
| Compound B: | N,N-dimethyl-3-(triethoxysilyl)propylamine |
| Compound C: | Silicon tetrachloride |

In Table 1, "-" indicates that the compound in the corresponding column was not used.

[Table 2]

| | Production Example 1 | Production Example 2 | Production Example 3 | Production Example 4 | Production Example 5 | Production Example 6 | Production Example 7 | Production Example 8 | Production Example 9 |
|---|---|---|---|---|---|---|---|---|---|
| Type of polymer | A-1 | A-2 | A-3 | A-4 | A-5 | A-6 | A-7 | A-8 | A-9 |
| Styrene content (wt%) | 34 | 20 | 10 | 10 | 20 | 10 | 40 | 34 | 34 |
| Vinyl content (mol%) | 27 | 35 | 35 | 30 | 33 | 24 | 48 | 27 | 27 |
| Hydrogenation rate (%) | 93 | 95 | 92 | 88 | 89 | 87 | 87 | 0 | 60 |
| $\theta$ | 0.93 | 0.95 | 0.92 | 0.88 | 0.89 | 0.87 | 0.87 | 0 | 0.60 |
| First peak molecular weight ($\times 10^4$) | 20 | 21 | 22 | 20 | 21 | 20 | 19 | 20 | 20 |
| Total weight average molecular weight ($\times 10^4$) | 34 | 32 | 38 | 30 | 32 | 30 | 28 | 34 | 37 |
| Glass transition temperature (°C) | -34 | -46 | -52 | -52 | -45 | -48 | -28 | -40 | -33 |

<Production of polymer composition and evaluation of properties thereof>

[Examples 1 to 16 and Comparative Examples 1 to 7]

Using a plastomill (internal capacity: 250 cc) equipped with a temperature control device, a first stage of kneading was carried out by mixing and kneading the conjugated diene-based polymer, the liquid polymer, silica, a silane coupling agent, extender oil, stearic acid, zinc oxide, and an antioxidant in the blending formulations of Tables 3 and 4 under conditions of a filling rate of 72% and a rotation speed of 60 rpm. Next, in the second kneading, the blend prepared above was cooled to room temperature and the water-soluble component (C), sulfur and vulcanization accelerator were kneaded based on the blending formulation of Table 3 and Table 4. The resultant was molded and vulcanized using a vulcanization press at 160°C for a predetermined time. The following properties (1) to (5) were evaluated using the vulcanized rubber. The type and the ratio of the conjugated diene-based polymer, the liquid polymer and the water-soluble component (C) used in Examples and Comparative Examples are as shown in Table 3 and Table 4. In Comparative Examples 1 and 2, polyisoprene rubber which is solid at room temperature was blended instead of the liquid polymer. The values in Table 3 and Table 4 indicate the ratio of the respective components blended (parts by mass).

<<Evaluation of properties>>

(1) Test for cohesiveness of rubber in process (evaluation of processability)

The shape of the polymer composition after kneading by a plastomill based on the blending formulation of Examples and Comparative Examples was observed, and then the composition was wound on a 6-inch open roll whose surface temperature was adjusted to 60°C to evaluate molding processability based on how the composition was wound on the roll. Sensory evaluation was performed on a scale of A to C with the result of Comparative Example 2 as "B." The evaluation criteria are as follows.

A: After kneading by a plastomill, 80% or more of the total mass of a lump of the polymer composition was discharged in a mass. The lump of the polymer composition was adhesive and wound on the roll at initial stages of feeding to the roll. Roll processability and moldability are very good.
B: After kneading by the plastomill, about 50 to 80% of the total mass of a lump of the polymer composition was discharged in a mass. The lump of the polymer composition was not wound on the roll at initial stages of feeding to the roll, but gradually wound on the roll. Roll processability and moldability are moderate.
C: After kneading by the plastomill, 50% or more of the total mass of a lump of the polymer composition was discharged in the form of powder. The lump of the polymer composition was not adhesive and not wound on the roll after feeding to the roll. The polymer composition could not be roll-processed or molded.

(2) Tensile strength

A tensile test was conducted in accordance with JIS K6251: 2010 using vulcanized rubber as a measurement sample. Here, using a No. 3 type dumbbell as a test sample, the stress at break (TB) and the elongation at break (EB) were measured at room temperature. The larger the values of TB and EB, the larger the breaking strength, indicating that the mechanical strength of the material is high and good. The evaluation was performed using the TB value, and the result is shown based on a value standardized so that the TB value of Comparative Example 2 was 100.

(3) Wear resistance

The vulcanized rubber was used as a measurement sample to measure wear resistance using DIN abrasion resistance tester (made by Toyo Seiki Seisaku-sho, Ltd.) at a load of 10N at 25°C according to JIS K6264-2:2005. The results are represented by a value standardized by the value of Comparative Example 2 as 100. A larger numerical value indicates a higher wear resistance.

(4) Grip performance on ice

Using vulcanized rubber with a diameter of 50 mm and a thickness of 10 mm as a measurement sample, the sample was pressed against fixed ice and rotated at a surface pressure of 12 $kgf/cm^2$ and a sample rotation main speed of 20 cm/sec in a -2°C environment. The generated frictional force was detected using a load cell, and a dynamic friction coefficient $\mu$ was calculated. The evaluation was performed using the dynamic friction coefficient $\mu$, and the result is shown based on a value standardized so that the dynamic friction coefficient $\mu$ of Comparative Example 2 was 100.

(5) Change in hardness (Δ hardness)

Hardness (Duro-A hardness) of the respective specimens of the vulcanized rubber sheets before and after heat aging was measured according to JIS K6253. The change in hardness over time was evaluated based on the difference in the hardness before and after heat aging. For the evaluation, specimens were rated on a scale of A to C: those with a difference in hardness before and after heat aging of less than 3 was rated as "A," those with a difference of 3 or more and less than 6 as "B," and those with a difference of 6 or more as "C." As used herein, "heat aging" refers to a process in which fresh vulcanized rubber is heat-aged (100°C for 70 hours) according to JIS K6257: 2010 to prepare heat-aged vulcanized rubber.

(6) Rolling resistance (50°C, tan δ)

The cross-linked rubber was used as a measurement sample to measure rolling resistance using ARES-RDA (made by TA Instruments) under conditions of a shear strain of 0.7%, an angular velocity of 100 radian per second and 50°C. The results of measurement are represented by an index with the result of Comparative Example 2 as 100. A larger numerical value indicates a smaller energy loss and better rolling resistance (fuel efficiency).
Tables 3 and 4 show the results of the evaluation of the properties of Examples 1 to 16 and Comparative Examples 1 to 7.

[Table 3]

| Blending formulation | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|
| Component A (Conjugated diene-based polymer) | A-2 (90) | A-3 (90) | A-4 (90) | A-5 (90) | A-6 (90) | A-4 (90) | A-4 (90) | A-4 (90) | A-4 (90) | A-4 (90) | A-4 (90) | A-4 (65) | A-4 (97) |
| Component B (Liquid polymer, etc.) | B-1 (10) | B-1 (10) | B-1 (10) | B-1 (10) | B-1 (10) | B-2 (10) | B-3 (10) | B-4 (10) | B-5 (10) | B-6 (10) | B-7 (10) | B-1 (35) | B-1 (3) |
| Component C (Water-soluble component) | | | | | | | | | | | | | |
| Silica * 1) | 50 | 50 | 50 | 50 | 50 | 50 | 50 | 50 | 50 | 50 | 50 | 50 | 50 |
| Carbon black * 2) | 10 | 10 | 10 | 10 | 10 | 10 | 10 | 10 | 10 | 10 | 10 | 10 | 10 |
| Silane coupling agent * 3) | 3 | 3 | 3 | 3 | 3 | 3 | 3 | 3 | 3 | 3 | 3 | 3 | 3 |
| Extender oil * 4) | 20 | 20 | 20 | 20 | 20 | 20 | 20 | 20 | 20 | 20 | 20 | 20 | 20 |
| Stearic acid | 2.0 | 2.0 | 2.0 | 2.0 | 2.0 | 2.0 | 2.0 | 2.0 | 2.0 | 2.0 | 2.0 | 2.0 | 2.0 |
| Zinc oxide | 3.0 | 3.0 | 3.0 | 3.0 | 3.0 | 3.0 | 3.0 | 3.0 | 3.0 | 3.0 | 3.0 | 3.0 | 3.0 |
| Antioxidant * 5) | 1.0 | 1.0 | 1.0 | 1.0 | 1.0 | 1.0 | 1.0 | 1.0 | 1.0 | 1.0 | 1.0 | 1.0 | 1.0 |
| Vulcanization accelerator CBS * 6) | 1.8 | 1.8 | 1.8 | 1.8 | 1.8 | 1.8 | 1.8 | 1.8 | 1.8 | 1.8 | 1.8 | 1.8 | 1.8 |
| Vulcanization accelerator D * 7) | 1.5 | 1.5 | 1.5 | 1.5 | 1.5 | 1.5 | 1.5 | 1.5 | 1.5 | 1.5 | 1.5 | 1.5 | 1.5 |
| Sulfur | 1.5 | 1.5 | 1.5 | 1.5 | 1.5 | 1.5 | 1.5 | 1.5 | 1.5 | 1.5 | 1.5 | 1.5 | 1.5 |
| Evaluation | | | | | | | | | | | | | |

(continued)

| | | | | | | | | | | | | | |
|---|---|---|---|---|---|---|---|---|---|---|---|---|---|
| Test for cohesiveness of rubber in process (evaluation of processability) | B | B | B | B | B | B | B | B | B | B | B | A | B |
| Tensile strength | 163 | 167 | 156 | 171 | 166 | 169 | 179 | 139 | 153 | 152 | 148 | 133 | 187 |
| Wear resistance | 153 | 154 | 158 | 161 | 154 | 149 | 161 | 137 | 151 | 142 | 142 | 119 | 175 |
| Grip performance on ice | 122 | 121 | 119 | 119 | 121 | 123 | 115 | 119 | 122 | 119 | 118 | 129 | 95 |
| Change in hardness | A | A | A | A | A | A | A | A | A | A | A | A | A |
| Rolling resistance | 103 | 109 | 105 | 103 | 104 | 107 | 112 | 106 | 106 | 105 | 106 | 99 | 108 |

[Table 4]

| Blending formulation | Example 14 | Example 15 | Example 16 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Component A (Conjugated diene-based polymer) | A-4 (90) | A-4 (90) | A-4 (90) | A-4 (90) | A-8 (90) | A-8 (90) | A-9 (90) | A-1 (90) | A-7 (90) | A-4 (90) |
| Component B (Liquid polymer, etc.) | B-1 (10) | B-1 (10) | B-1 (10) | B-0 (10) | B-0 (10) | B-1 (10) | B-1 (10) | B-1 (10) | B-1 (10) | B-8 (10) |
| Component C (Water-soluble component) | C-1 (5) | C-2 (5) | C-3 (5) | | | | | | | |
| Silica ∗ 1) | 50 | 50 | 50 | 50 | 50 | 50 | 50 | 50 | 50 | 50 |
| Carbon black ∗ 2) | 10 | 10 | 10 | 10 | 10 | 10 | 10 | 10 | 10 | 10 |
| Silane coupling agent ∗ 3) | 3 | 3 | 3 | 3 | 3 | 3 | 3 | 3 | 3 | 3 |
| Extender oil ∗ 4) | 20 | 20 | 20 | 20 | 20 | 20 | 20 | 20 | 20 | 20 |
| Stearic acid | 2.0 | 2.0 | 2.0 | 2.0 | 2.0 | 2.0 | 2.0 | 2.0 | 2.0 | 2.0 |
| Zinc oxide | 3.0 | 3.0 | 3.0 | 3.0 | 3.0 | 3.0 | 3.0 | 3.0 | 3.0 | 3.0 |
| Antioxidant ∗ 5) | 1.0 | 1.0 | 1.0 | 1.0 | 1.0 | 1.0 | 1.0 | 1.0 | 1.0 | 1.0 |
| Vulcanization accelerator CBS ∗ 6) | 1.8 | 1.8 | 1.8 | 1.8 | 1.8 | 1.8 | 1.8 | 1.8 | 1.8 | 1.8 |
| Vulcanization accelerator D ∗ 7) | 1.5 | 1.5 | 1.5 | 1.5 | 1.5 | 1.5 | 1.5 | 1.5 | 1.5 | 1.5 |
| Sulfur | 1.5 | 1.5 | 1.5 | 1.5 | 1.5 | 1.5 | 1.5 | 1.5 | 1.5 | 1.5 |
| Evaluation | | | | | | | | | | |

(continued)

| | | | | | | | | | | |
|---|---|---|---|---|---|---|---|---|---|---|
| Test for cohesiveness of rubber in process (evaluation of processability) | B | B | B | C | B | A | A | B | A | B |
| Tensile strength | 138 | 141 | 137 | 181 | 100 | 91 | 98 | 198 | 137 | 148 |
| Wear resistance | 149 | 143 | 144 | 163 | 100 | 97 | 98 | 137 | 121 | 138 |
| Grip performance on ice | 126 | 128 | 127 | 92 | 100 | 105 | 104 | 106 | 94 | 132 |
| Change in hardness | A | A | A | A | C | C | B | A | A | A |
| Rolling resistance | 101 | 103 | 102 | 107 | 100 | 98 | 93 | 94 | 90 | 93 |

Details of the respective components in Table 3 and Table 4 are as follows.

B-0: Polyisoprene rubber, trade name "IR2200" made by JSR
B-1: Liquid polyisoprene, trade name "LIR-30" made by Kuraray Co., Ltd.
B-2: Liquid polybutadiene, trade name "NISSO-PB B-3000" made by Nippon Soda Co., Ltd.
B-3: Hydrogenated liquid polybutadiene, trade name "NISSO-PB BI-3000" made by Nippon Soda Co., Ltd.
B-4: Liquid butadiene modified at both ends, trade name "NISSO-PB G-3000" made by Nippon Soda Co., Ltd.
B-5: Polybutene, trade name "HV-35" made by ENEOS Corporation
B-6: Ethylene olefin cooligomer, trade name "HC40" made by Mitsui Chemicals, Inc.
B-7: Ethylene olefin cooligomer, trade name "HC600" made by Mitsui Chemicals, Inc.
B-8: Liquid styrene butadiene rubber (styrene content: 25% by mass), trade name "RICON 100" made by CRAY VALLEY
C-1: Magnesium sulfate, trade name "MN-00" made by Umai Chemical Co., Ltd.
C-2: Polyvinyl alcohol short fiber, trade name "Kuralon 1239" made by Kuraray Co., Ltd.
C-3: Sodium ligninsulfonate made by Tokyo Chemical Industry, Co., Ltd.
B-1 to B-8 are a liquid polymer. C-1 to C-3 correspond to the water-soluble component (C).

The details of each of the components *1) to *7) used in Tables 3 and 4 are as follows.

*1) ZEOSIL 1165MP manufactured by Rhodia Silcea
*2) DIABLACK N339 made by Mitsubishi Chemical Corporation
*3) Si75 manufactured by Evonik Industries AG
*4) Process oil T-DAE, manufactured by JX Nippon Oil & Energy USA Inc.
*5) Ozonone 6C, manufactured by Seiko Chemical Co., Ltd.
*6) Nocceler CZ-G, manufactured by Ouchi Shinko Chemical Industrial Co., Ltd.
*7) Nocceler D, manufactured by Ouchi Shinko Chemical Industrial Co., Ltd.

In Tables 3 and 4, the numerical values in parentheses represent the blended amounts (parts by mass) when the polymer composition was prepared.

As shown in Table 3 and Table 4, for the polymer compositions (Examples 1 to 16) containing the polymer (A1) with a hydrogenation ratio of 75% or more as the conjugated diene-based polymer (A) and the specific liquid polymer, the values (indexes) of tensile strength, wear resistance, grip performance on ice and rolling resistance were sufficiently high, and rubber was highly cohesive in the process of production (in other words had good processability in kneading rubber), and was showed a good balance among the various properties. In addition, change in hardness was small and reduction of properties over time was suppressed in Examples 1 to 16. Furthermore, the polymer compositions also containing the water-soluble component (C) (Examples 13 to 15) had further improved grip performance on ice compared with Example 3 containing no water-soluble component (C).

Furthermore, in Example 7 in which a hydrogenated polymer was used as the liquid polymer, the rubber had improved tensile strength, wear resistance and rolling resistance compared with Example 6 in which a liquid polymer which had not been hydrogenated was used.

By contrast, for the polymer composition of Comparative Example 1 which contains the polymer (A1) and does not contain the liquid polymer, cohesiveness of the rubber in the process was poor and processability was rated as "C." Furthermore, in Comparative Example 2 and Comparative Example 3 in which a conjugated diene-based polymer with a hydrogenation ratio of 0% and a glass transition temperature of -40°C was used and Comparative Example 4 in which a conjugated diene-based polymer with a hydrogenation ratio of 60% and a glass transition temperature of -33°C was used, tensile strength and wear resistance were much lower and grip performance on ice was poorer than those in Examples 1 to 16. In Comparative Example 5 in which a conjugated diene-based polymer with a glass transition temperature of -34°C was used and Comparative Example 6 in which a conjugated diene-based polymer with a glass transition temperature of -28°C was used, grip performance on ice and rolling resistance were lower than those in Examples 1 to 16. In Comparative Example 7 in which styrene butadiene liquid rubber with a styrene content of 25% by mass was used as the component B, rolling resistance was lower than that in Examples 1 to 16.

The above results show that the polymer composition comprising the polymer (A1) and a specific liquid polymer has excellent cohesiveness and processability of rubber in kneading the polymer composition while keeping tensile strength and wear resistance high, and can improve grip performance on ice and rolling resistance and can suppress reduction of properties over time.

## Claims

1. A polymer composition comprising:

   a conjugated diene-based polymer (A); and
   a liquid polymer (B), wherein
   the conjugated diene-based polymer (A) comprises a polymer (A1) satisfying expression (i) when a composition ratio (molar ratio) of a structural unit represented by formula (1), a structural unit represented by formula (2), a structural unit represented by formula (3) and a structural unit represented by formula (4) in the polymer is p, q, r and s, respectively,
   the polymer (A1) comprises a glass transition temperature of -40°C or less, and
   the liquid polymer (B) is at least one selected from the group consisting of polybutadiene and a hydrogenated product thereof, polyisoprene and a hydrogenated product thereof, a styrene-butadiene copolymer comprising a styrene content of 20% by mass or less and a hydrogenated product thereof, a styrene-isoprene copolymer and a hydrogenated product thereof, a butadiene-isoprene copolymer and a hydrogenated product thereof, an isoprene-butadiene-styrene copolymer and a hydrogenated product thereof, polyisobutylene, polybutene, an ethylene-α-olefin copolymer, an ethylene-propylene-diene copolymer and polyfarnesene:

   Expression (i):

   $$0.75 \leq (p + (0.5 \times r))/ (p + q + (0.5 \times r) + s) \leq 0.97$$

   [F1]

   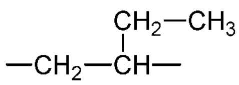

   (1)

   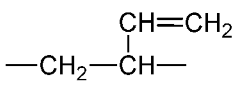

   (2)

   $-CH_2-CH_2-$

   (3)

   $-CH_2-CH=CH-CH_2-$

   (4)

2. The polymer composition according to claim 1, wherein a proportion of the polymer (A1) in the conjugated diene-based polymer (A) is 50% by mass or more.

3. The polymer composition according to claim 1 or 2, wherein the polymer (A1) has a weight average molecular weight (Mw) in terms of polystyrene measured by a gel permeation chromatograph of $1.0\times10^5$ to $2.0\times10^6$.

4. The polymer composition according to any one of claims 1 to 3, wherein the polymer (A1) comprises 3 to 45% by mass of a structural unit derived from an aromatic vinyl compound relative to the total amount of the monomer units the polymer (A1) comprises.

5. The polymer composition according to any one of claims 1 to 4, wherein the polymer (A1) comprises at least one functional group selected from the group consisting of an amino group, a nitrogen-containing heterocyclic group, a phosphino group, a hydroxyl group, a thiol group and a hydrocarbyloxysilyl group.

6. The polymer composition according to any one of claims 1 to 5, wherein the polymer (A1) comprises a partial structure derived from at least one compound selected from the group consisting of a compound represented by formula (5) and a compound represented by formula (6):

[F2]

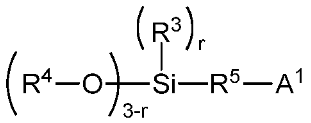 (5)

wherein $A^1$ represents a monovalent functional group which comprises at least one atom selected from the group consisting of nitrogen, phosphorus, oxygen, sulfur, and silicon, which does not have active hydrogen, and which is bonded to $R^5$ via a nitrogen atom, a phosphorus atom, an oxygen atom, a sulfur atom, a silicon atom, or a carbon atom comprised in a carbonyl group, or a (thio)epoxy group; $R^3$ and $R^4$ each independently represent a hydrocarbyl group; $R^5$ represents a hydrocarbylene group; r is an integer of 0 to 2; when r is 2, a plurality of groups $R^3$ in the formula are the same or different; and when r is 0 or 1, a plurality of groups $R^4$ in the formula are the same or different.

[F3]

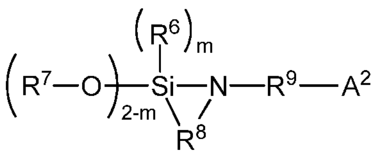 (6)

wherein $A^2$ represents a monovalent functional group which comprises at least one atom selected from the group consisting of nitrogen, phosphorus, oxygen, sulfur, and silicon, which does not have active hydrogen, and which is bonded to $R^9$ via a nitrogen atom, a phosphorus atom, an oxygen atom, a sulfur atom, or a silicon atom, or a C1 to C20 hydrocarbyl group; $R^6$ and $R^7$ each independently represent a hydrocarbyl group; $R^8$ represents a hydrocarbylene group; $R^9$ represents a single bond or a hydrocarbylene group; m is 0 or 1; and when m is 0, a plurality of groups $R^7$ in the formula are the same or different.

7. The polymer composition according to any one of claims 1 to 6, wherein a content of the liquid polymer (B) is 1 to 50 parts by mass relative to 100 parts by mass of the conjugated diene-based polymer (A).

8. The polymer composition according to any one of claims 1 to 7, wherein the liquid polymer (B) has at least one functional group selected from the group consisting of an amino group, a nitrogen-containing heterocyclic group, a phosphino group, a hydroxyl group, a carboxy group, an acid anhydride group, a thiol group and a hydrocarbyloxysilyl group.

9. The polymer composition according to any one of claims 1 to 8, further comprising a component (C),
Wherein the component (C) is at least one selected from the group consisting of a water-soluble particle and a water-soluble fiber.

10. The polymer composition according to any one of claims 1 to 9, further comprising at least one selected from the group consisting of silica and carbon black.

11. The polymer composition according to any one of claims 1 to 10, further comprising a crosslinking agent.

12. A cross-linked product obtained by employing the polymer composition according to any one of claims 1 to 11.

13. A tire in which one or both of a tread and a sidewall are formed using the polymer composition according to any one of claims 1 to 11.

## INTERNATIONAL SEARCH REPORT

International application No.
**PCT/JP2021/043603**

**A. CLASSIFICATION OF SUBJECT MATTER**

***B60C 1/00***(2006.01)i; ***C08L 9/00***(2006.01)i; ***C08L 9/06***(2006.01)i; ***C08L 101/12***(2006.01)i; ***C08K 3/04***(2006.01)i; ***C08K 3/36***(2006.01)i
FI: C08L9/00; C08L101/12; C08L9/06; C08K3/04; C08K3/36; B60C1/00 A; B60C1/00 B

According to International Patent Classification (IPC) or to both national classification and IPC

**B. FIELDS SEARCHED**

Minimum documentation searched (classification system followed by classification symbols)

C08L9/00-9/10; C08L101/00-101/14; C08K3/00-3/40; C08K5/00-5/59; B60C1/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2020/203984 A1 (JSR CORP.) 08 October 2020 (2020-10-08) claims, paragraphs [0006], [0016], [0029]-[0032], [0051], [0056]-[0058], [0066], [0067], table 2 | 1-13 |
| Y | JP 2020-55980 A (SUMITOMO RUBBER INDUSTRIES, LTD.) 09 April 2020 (2020-04-09) paragraphs [0047]-[0051] | 1-13 |
| Y | JP 2019-157043 A (SUMITOMO RUBBER INDUSTRIES, LTD.) 19 September 2019 (2019-09-19) paragraph [0045] | 1-13 |
| Y | JP 2016-124999 A (YOKOHAMA RUBBER CO., LTD.) 11 July 2016 (2016-07-11) paragraphs [0030]-[0031] | 1-13 |
| Y | WO 2020/129356 A1 (SUMITOMO RUBBER INDUSTRIES, LTD.) 25 June 2020 (2020-06-25) paragraphs [0022], [0066]-[0071] | 1-13 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 December 2021** | **11 January 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**

International application No.
**PCT/JP2021/043603**

**C. DOCUMENTS CONSIDERED TO BE RELEVANT**

| Category* | Citation of document, with indication, where appropriate, of the relevant passages | Relevant to claim No. |
|---|---|---|
| Y | JP 3-159803 A (SUMITOMO RUBBER INDUSTRIES, LTD.) 09 July 1991 (1991-07-09) claims, p. 1, right column, line 17 to p. 2, upper left column, line 10 | 9-13 |
| A | WO 2017/150645 A1 (JSR CORP.) 08 September 2017 (2017-09-08) entire text | 1-13 |

Form PCT/ISA/210 (second sheet) (January 2015)

**INTERNATIONAL SEARCH REPORT**
**Information on patent family members**

International application No.
**PCT/JP2021/043603**

| Patent document cited in search report | Publication date (day/month/year) | Patent family member(s) | Publication date (day/month/year) |
|---|---|---|---|
| WO 2020/203984 A1 | 08 October 2020 | (Family: none) | |
| JP 2020-55980 A | 09 April 2020 | WO 2020/071342 A1<br>paragraphs [0048]-[0052] | |
| JP 2019-157043 A | 19 September 2019 | (Family: none) | |
| JP 2016-124999 A | 11 July 2016 | (Family: none) | |
| WO 2020/129356 A1 | 25 June 2020 | (Family: none) | |
| JP 3-159803 A | 09 July 1991 | (Family: none) | |
| WO 2017/150645 A1 | 08 September 2017 | US 2019/0062539 A1<br>entire text<br>EP 3424961 A1<br>CN 108495872 A<br>KR 10-2018-0104068 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020197516 A
- WO 2015064646 A
- JP S634841 B
- US H0137970 A
- JP 200 A